# NEUE EUROPÄISCHE PATENTSCHRIFT

(11) **EP 1 892 073 B2**
(45) Veröffentlichungstag und Bekanntmachung des Hinweises auf die Entscheidung über den Einspruch: **30.07.2014**
(45) Hinweis auf die Patenterteilung: 01.10.2008
(21) Anmeldenummer: 07112830.0
(22) Anmeldetag: 20.07.2007
(51) Int. Cl.: B29C 33/60, C08K 5/098

(54) **Wässrige Trennmittel und ihre Verwendung bei der Herstellung von Polyurethan-Formkörpern**
Aqueous release agent and its application in manufacturing polyurethane moulded bodies
Agent aqueux de séparation et son utilisation pour la fabrication d'objets moulés en polyuréthane

(30) Priorität: 25.08.2006 DE 102006040009
(43) Veröffentlichungstag der Anmeldung: 27.02.2008
(73) Patentinhaber: Evonik Degussa GmbH, 45128 Essen (DE)
(72) Erfinder: Henning, Torsten, Dr., 19057 Schwerin (DE)

(56) Entgegenhaltungen:
- EP-A- 0 460 783
- EP-A2- 0 164 501
- DE-A1- 1 925 675
- US-A- 6 162 290
- FIRMA C.H.ERBSLÖH: 'Technische Produktinformation COSCAT 83' 25 Juni 1998, Seiten 1 - 2
- FIRMA C.H. ERBSLÖH: 'Sicherheitsdatenblatt gemäss 91/155/EWG für das Produkt Coscat83' 04 Dezember 2003,

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen aufgebracht werden.

Solche Trennmittel bestehen aus Dispersionen oder Emulsionen von Wachsen, Seifen, Ölen und/oder Silikonen in Lösungsmitteln wie Kohlenwasserstoffe oder Wasser.

Nach Aufbringen des Trennmittels auf die Form verdampft das Lösungsmittel und die nichtflüchtigen, trennaktiven Substanzen bilden einen dünnen Trennfilm, der gewährleisten soll, dass der Polyurethan-Formkörper nach der Herstellung leicht aus der Form entnommen werden kann.

Um die Umweltbelastung mit organischem Material zu reduzieren, besteht ein hohes Interesse an Trennmitteln auf wässriger Basis, die frei von flüchtigem, organischem Material sind. Die im Markt befindlichen wässrigen Trennmittel zeigen jedoch gegenüber klassischen, organischen Lösungsmitteln enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 °C bis 80 °C, bevorzugt 50 °C bis 75 °C, nicht verflüchtigt und mit den Isocyanatverbindungen des Polyurethansystems Reaktionen eingeht, die zu sehr harten Polyharnstoffverbindungen führen. Dadurch werden die Formoberflächen gestört. Sie erhalten einen so genannten Aufbau, von dem sie aufwändig gereinigt werden müssen.

Neben der eigentlich benötigten Trennwirkung übernimmt das Trennmittel noch weitere Funktionen. So beeinflusst es auch sehr stark die Oberfläche des Polyurethan-Formkörpers, die feinporig bzw. glatt und gleichmäßig sein soll, unter anderem auch, um eine gute, d.h. leichte, Beziehbarkeit der fertigen Formteile mit Stoffen oder Leder zu gewährleisten.

Im Zuge immer stärkerer Optimierung der Produktionsgeschwindigkeiten, insbesondere in der Automobilzuliefererindustrie, ist gerade die oben beschriebene Eigenschaft der Beziehbarkeit des Polyurethan-Formkörpers zu einem wichtigen Qualitätsmerkmal geworden.

Eine Möglichkeit, die Oberflächenqualität der Polyurethanformschaumteile zu verbessern, ist der Einsatz von Stoffen, die die Polyol-Isocyanat-Reaktion katalysieren und dadurch beschleunigen. Die im Markt befindlichen wässrigen Trennmittel für Polyurethanformteile enthalten daher üblicherweise so genannte Zinnbeschleuniger, also Katalysatoren auf der Basis von organischen Zinnverbindungen. Neben der Verbesserung der Oberflächenqualität wirken diese Zinnbeschleuniger auch trennunterstützend, da sie die Polyol-Isocyanat-Reaktion an der Grenzfläche zwischen Schaum und Trennfilm beschleunigen.

Dadurch wird auch das oben beschriebene Problem des Formenaufbaus gemildert, da durch die Trennunterstützung des Zinnbeschleunigers weniger Trennmittel auf die Form aufgebracht werden muss, um eine gute Trennwirkung zu erreichen.

Besonders geeignet sind Di-n-butylzinndicarboxylate, wie in EP 1 082 202 beschrieben. Hauptsächlich wird Dibutylzinndilaurat (DBTL) eingesetzt, wie zum Beispiel in DE 35 41 513 oder DE 34 10 219 beschrieben.

Bekanntlich ist DBTL mit R 50/53 (umweltgefährlich, sehr giftig für Wasserorganismen) gekennzeichnet und birgt bei Lagerung und Transport von Trennmitteln, die DBTL enthalten, Risiken für die Umwelt in sich.

Daher fordern bereits jetzt viele Polyurethanformschaumkunden, beispielsweise im Schuhsohlen- oder Matratzenbereich, dass das verwendete Trennmittel frei ist von Zinnverbindungen.

Die Druckschrift DE-A-1925675 offenbart Trennmittel-Dispersionen für die Herstellung von Polyurethan-Formkörpern enthaltend Bismutoleat.

Außerdem wird seitens des ECB (European Chemical Bureau) eine Gruppeneinstufung vorgenommen werden, die organische Zinnverbindungen als reproduktionstoxisch mit den R-Sätzen R60-R61 kennzeichnet. Einige Di-n-butylzinndicarboxylate, darunter DBTL, werden davon betroffen sein. Trennmittel, die solche Komponenten enthalten, sind dann praktisch nicht mehr einsetzbar.

Aufgabe der vorliegenden Erfindung war es daher, wässrige Formtrennmittel zu finden, die frei sind von zinnorganischen Verbindungen, die aber trotzdem eine gute Trennwirkung zeigen, keinen Aufbau an den Formwänden bewirken und die Oberflächen der Polyurethan-Formkörper günstig beeinflussen, also feinporig, gleichmäßig und glatt hinterlassen.

Überraschenderweise wurde gefunden, dass durch die Verwendung von Bismutsalzen organischer Säuren als Katalysatoren in Mengen von 0,5 bis 10 Gew.-%, bevorzugt 0,5 bis 5 Gew. %, insbesondere 0,5 bis 3 Gew. %, in wässrigen Dispersionen enthaltend klassische, trennaktive Substanzen wie Wachse, Seifen, Öle und/oder Silikone in Mengen von 0,5 bis 40 Gew.-%, bevorzugt 3 bis 20 Gew.-%, diese Aufgabe erfüllen.

Ein Gegenstand der Erfindung sind daher wässrige Trennmittel-Dispersionen für die Herstellung von Polyurethan-Formkörpern enthaltend im Wesentlichen:
A) mindestens ein trennaktives Mittel aus der Gruppe der Seifen, Öle, Wachse und Silikone und
B) Emulgatoren und
C) gegebenenfalls Schaumstabilisatoren und
D) gegebenenfalls Viskositätsmodifizierer und
E) gegebenenfalls Hilfs- und Zusatzstoffe und
F) 0,5 bis 10 Gew.-%, vorzugsweise 0,5 bis 5 Gew.-%, mindestens eines Bismutcarboxylats und
G) Wasser, wobei als Bismutcarboxylat Bismuttrioctoat und/oder Bismuttrineodecanoat eingesetzt werden.

Bevorzugt bestehen die Dispersionen aus:
A) 0,5 bis 40 Gew.-% mindestens eines trennaktiven Mittels ausgesucht aus der Gruppe der Seifen, Öle, Wachse und Silikone und
B) 0,1 bis 10 Gew.-% Emulgatoren,
C) 0 bis 5 Gew.-% Schaumstabilisatoren,
D) 0 bis 5 Gew.-% Viskositätsmodifizierer,
E) 0 bis 2 Gew.-% übliche Konservierungsmittel, Bakterizide, Fungizide und Antioxidantien,
F) 0,5 bis 10 Gew.-%, vorzugsweise 0,5 bis 5 Gew.-%, mindestens des Bismutcarboxylats und
G) Wasser.

Der Gehalt dieser Fettsäuren an ungesättigten Anteilen wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi® Kat (Fa. Borchers GmbH) oder Tegokat® (Fa. Goldschmidt TIB GmbH), Neobi® 200, Fa. Shepherd, Coscat®, Fa. Caschem. Diese Stoffe sind nicht als giftig und nicht als umweltgefährlich eingestuft.

Diese Salze katalysieren einmal die Reaktion der Polyole mit den Isocyanaten an den Grenzflächen der Reaktionsmischung/Formoberfläche und beeinflussen weiterhin die Oberfächenbeschaffenheit des Schaums in Richtung auf die erforderliche Zelligkeit und Struktur: Diese soll innerhalb einer gewissen Zellgröße liegen (feinzellig, aber kein Mikroschaum oder Grobschaum) und leicht offenporig sein (nicht geschlossen oder überwiegend offen). Diese Kriterien sind weitgehend praxisbezogen, d.h. durch einige orientierende Versuche optimierbar, und erleichtern die Beziehbarkeit des Formkörpers mit beispielsweise textilen Bezügen.

Ein weiterer Gegenstand der Erfindung ist die Verwendung dieser Dispersionen als externe Trennmittel bei der Herstellung von Polyurethan-Formkörpern.

Weitere Gegenstände der Erfindung sind durch die Ansprüche gekennzeichnet.

Als klassische, trennaktive Substanzen können erfindungsgemäß beispielsweise verwendet werden:
Wachse, d.h. flüssige, feste, natürliche oder synthetische Wachse, auch oxidiert und/oder teilverseift; Ester von Carbonsäuren mit Alkoholen oder Fettalkoholen, Metallseifen, wie Alkali- oder Erdalkalimetallsalze von Fettsäuren;
Öle, wie bei Raumtemperatur flüssige oder zähfließende Kohlenwasserstoffe, gegebenenfalls aber nicht bevorzugt, unter Mitverwendung ungesättigter oligomerer und/oder polymerer Kohlenwasserstoffe;
Silikone, wie Polydimethylsiloxane, gegebenenfalls substituiert mit aliphatischen oder aromatischen Kohlenwasserstoffresten.

Typische, trennwirksame Wachse sind beispielsweise aufgeführt in den Firmenschriften "Waxes by Clariant, production, characteristics and applications" Clariant Mai 2003 und "Formtrennmittel mit Vestowax®" von Degussa.

Als übliche Emulgatoren können ein oder mehrere Verbindungen ausgesucht aus den Gruppen
I) anionische Emulgatoren wie
   Alkylethercarboxylate, Alkylsulfate, Fettalkoholethoxylatethersulfate, alpha-Olefinsulfonate, Alkylphosphate, Alkylpolyetherphosphate, Alkylsulfosuccinate, nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester,
II) kationische Emulgatoren wie
   sauer gestellte Alkyldimethylamine, quaternäre Stickstoffverbindungen,
III) zwitterionische Tenside,
die in Mengen von 0,1 bis 10 Gew.-%, bevorzugt 0,5 bis 6 Gew.-%, mitverwendet werden.

Als übliche Hilfs- und Zusatzstoffe können eine oder mehrere der im Stand der Technik bekannten Verbindungen mitverwendet werden, beispielsweise ausgesucht aus der Gruppe der Polyurethanschaumstabilisatoren, zum Beispiel Polysiloxan-Polyether-Copolymerisate, des Weiteren übliche Viskositätsmodifizierer wie typische Verdicker, wie als Carbomere bezeichnete Polyacrylsäurederivate oder andere Polyelektrolytverdicker wie wasserlösliche Cellulosederivate oder auch Xanthan Gum. Als Viskositätsmodifizierer in wässrigen Formulierungen können auch aliphatische Kohlenwasserstoffe gesehen werden, also Benzinfraktionen, die die eingesetzten Wachse aufquellen und so einen verdickenden Effekt zeigen, übliche Konservierungsmittel, Bakterizide, Fungizide und Antioxidantien.

Die erfindungsgemäßen Dispersionen können nach den im Stand der Technik bekannten Verfahren hergestellt werden. Bevorzugt geht man so vor, dass der Emulgator mit trennaktiven Substanzen in geschmolzener Form (unterhalb der Siedetemperatur des Wassers) vorgelegt, scherkraftreich ein Teil des Wassers eingetragen wird, dann das restliche Wasser, enthaltend die weiteren Komponenten, scherkraftarm zugegeben wird.

Klassischerweise wird die Form auf die gewünschte Formtemperatur von 45°C bis 80°C, bevorzugt 50°C bis 75°C, gebracht, mit Trennmittel eingesprüht, eine gewisse Zeit - je nach Wasseranteil ca. 1 bis 10 Minuten - gewartet, bis die größte Menge Wasser verdampft ist, und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

### Beispiele

Die folgenden Beispiele dienen zur näheren Beschreibung der Erfindung, ohne sie darauf einzuschränken.

Liste der eingesetzten Substanzen:
- DC® 190 = Polyethersiloxan, Hersteller: Air Products,
- Polyöl® 130 = Polybutadien mit mittlerer Molmasse von ca. 3.000 und Iodzahl von ca. 450 g Jod/100 g, Hersteller: Degussa,
- Fettamin = R-NH₂ mit R = C₁₂₋₂₂, gegebenenfalls verzweigter Alkylrest,
- Mikrowachs = handelsübliche Wachse mit einer Erstarrungstemperatur von 50°C bis 90°C,
- Polyethylenwachs = handelsübliche Wachse mit einer Erstarrungstemperatur von 50°C bis 90°C,
- Tegokat® Bismut(III)neodecanoat, Hersteller: Goldschmidt TIB GmbH
- Kosmos® 19 = Dibutylzinndilaurat (DBTL), Hersteller: Goldschmidt GmbH
- Desmophen® PU 50REII = Polyetherpolyol, Hersteller: Bayer,
- Tegoamin® TA 33, Hersteller: Goldschmidt GmbH
- Tegostab® B 4113 = organomodifiziertes Siloxan, Hersteller: Goldschmidt GmbH,
- Suprasec® X 2412 = Diphenylmethan-4,4'-diisocyanat, Hersteller: Huntsman.

### Vergleichsbeispiel 1

Trennmittel 1, ohne Katalysator:
1,2 Gew.-% Polyethylenwachs (Erstarrungspunkt 60°C), 6,4 Gew.-% Mikrowachs (Erstarrungspunkt 70°C), 6,0 Gew.-% Polyöl® 130, 1,4 Gew.-% Fettamin, 0,1 Gew.-% Essigsäure (60 % in Wasser), 1,5 Gew.-% DC® 190, 83,4 Gew.-% Wasser.

### Vergleichsbeispiel 2

Trennmittel 2, mit DBTL:
1,2 Gew.-% Polyethylenwachs (Erstarrungspunkt 60°C), 6,4 Gew.-% Mikrowachs (Erstarrungspunkt 70°C), 6,0 Gew.-% Polyöl® 130, 1,4 Gew.-% Fettamin, 0,1 Gew.-% Essigsäure (60 % in Wasser), 1,5 Gew.-% DC® 190, 0,4 Gew.-% Kosmos® 19, 83,0 Gew.-% Wasser.

### Beispiel 3 nicht zur Erfindung gehörend

Trennmittel 3, mit Bismut(III)neodecanoat:
1,2 Gew.-% Polyethylenwachs (Erstarrungspunkt 60°C), 6,4 Gew.-% Mikrowachs (Erstarrungspunkt 70°C), 6,0 Gew.-% Polyöl® 130, 1,4 Gew.-% Fettamin, 0,1 Gew.-% Essigsäure (60 % in Wasser), 1,5 Gew.-% DC® 190, 0,3 Gew.-% Tegokat® Bismut(III)neodecanoat, 83,1 Gew.-% Wasser.

### Beispiel 4

Trennmittel 4, mit Bismut(III)neodecanoat:
1,2 Gew.-% Polyethylenwachs (Erstarrungspunkt 60°C), 6,4 Gew.-% Mikrowachs (Erstarrungspunkt 70°C), 6,0 Gew.-% Polyöl® 130, 1,4 Gew.-% Fettamin, 0,1 Gew.-% Essigsäure (60 % in Wasser), 1,5 Gew.-% DC® 190, 0,6 Gew.-% Tegokat® Bismut(III)neodecanoat, 82,8 Gew.-% Wasser.

### Beispiel 5

Trennmittel 4, mit Bismut(III)octoat:
1,2 Gew.-% Polyethylenwachs (Erstarrungspunkt 60°C), 6,4 Gew.-% Mikrowachs (Erstarrungspunkt 70°C), 6,0 Gew.-% Polyöl® 130, 1,4 Gew.-% Fettamin, 0,1 Gew.-% Essigsäure (60 % in Wasser), 1,5 Gew.-% DC® 190, 0,6 Gew.-% Tegokat® Bismut(III)octoat, 82,8 Gew.-% Wasser.

### Trennmittelversuche

Die Trennmittel wurden mittels einer 0,5 mm Düse in praxisnahen Mengen von 20 g/m² auf Testmetallplatten aufgesprüht und ein schäumbares Polyurethansystem bestehend aus 100 Teilen Desmophen® PU 50REII, 3,5 Teilen Wasser, 0,5 Teilen Tegoamin® TA 33, 1,5 Teilen Diethanolamin, 1 Teil Tegostab® B4113, 78 Teilen Suprasec® X 2412 auf diese Platten in einer Kastenform bei 48°C aufgeschäumt.

Nach dem Aushärten (10 Minuten) wurden die Metallplatten unter Verwendung eines Federkraftmessers vom Schaum abgezogen, um ein Maß für die Trennwirkung zu messen.

### Bewertung der Trennversuche

| Trennmittel | Kraft zum Abziehen der Metallplatte vom Schaum [kg] | Beurteilung der Schaumoberfläche |
|---|---|---|
| 1 | 1,1 | Hautbildung, schmierig, schlecht beziehbar, da zu hohe Reibungskräfte an der geschlossenen und damit größeren Oberfläche |
| 2 | 0,8 | leicht offenporig, trocken, gut beziehbar |
| 3 | 0,8 | leicht bis weniger offenporig, befriedigend bis gut beziehbar |
| 4 | 0,8 | leicht offenporig, trocken, gut beziehbar |
| 5 | 0,9 | leicht offenporig, trocken, gut beziehbar |

Wie aus obiger Tabelle ersichtlich, erfüllen die erfindungsgemäß verwendeten ungiftigen Bismutsalze die Forderungen der Praxis hinsichtlich Beziehbarkeit und Poreneigenschaften. Sie weisen deutliche technische Vorteile gegenüber dem Blindwert ohne Katalysator (Trennmittel 1) und sind technisch gleichwirkend mit den giftigen Zinnverbindungen (Trennmittel 2).

## Patentansprüche

1. Wässrige Trennmittel-Dispersionen für die Herstellung von Polyurethan-Formkörpern enthaltend im Wesentlichen:
A) mindestens ein trennäktives Mittel aus der Gruppe der Seifen, Öle, Wachse und Silikone und
B) Emulgatoren und
C) gegebenenfalls Schaumstabilisatoren und
D) gegebenenfalls Viskositätsmodifizierer und
E) gegebenenfalls Hilfs- und Zusatzstoffe und
F) 0,5 bis 10 Gew.-% mindestens eines Bismutcarboxylats und
G) Wasser,
wobei als Bismutcarboxylat Bismuttrioctoat und/oder Bismuttrineodecanoat eingesetzt werden.

2. Wässrige Trennmittel-Dispersionen für die Herstellung von Polyurethan-Formkörpern gemäß Anspruch 1 enthaltend im Wesentlichen:
A) 0,5 bis 40 Gew.-% mindestens eines trennaktiven Mittels ausgesucht aus der Gruppe der Seifen, Öle, Wachse und Silikone und
B) 0,1 bis 10 Gew.-% Emulgatoren,
C) 0 bis 5 Gew.-% Schaumstabilisatoren,
D) 0 bis 5 Gew.-% Viskositätsmodifizierer,
E) 0 bis 2 Gew.-% übliche Konservierungsmittel, Bakterizide, Fungizide und Antioxidantien,
F) 0,5 bis 10 Gew.-% mindestens des Bismutcarboxylats und
G) Wasser.

3. Verwendung der Trennmittel-Dispersionen gemäß Anspruch 1 oder 2 zur Herstellung von Polyurethan-Formkörpern.

4. Verwendung der Trennmittel-Dispersionen gemäß den Ansprüchen 1 bis 3 zur Verbesserung der Beziehbarkeit von damit hergestellten Polyurethan-Formkörpern.

## Claims

1. Aqueous release agent dispersion for producing polyurethane moldings, substantially comprising
A) at least one agent having release activity, from the group consisting of soaps, oils, waxes and silicones, and
B) emulsifiers and
C) if desired, foam stabilizers, and
D) if desired, viscosity modifiers, and
E) if desired, auxiliaries and additives, and
F) 0.5% to 10% by weight of at least one bismuth carboxylate, and
G) water,
bismuth trioctoate and/or bismuth trineodecanoate being used as bismuth carboxylate.

2. Aqueous release agent dispersion for producing polyurethane moldings according to Claim 1, substantially comprising
A) 0.5% to 40% by weight of at least one agent having release activity, selected from the group consisting of soaps, oils, waxes, and silicones and
B) 0.1% to 10% by weight of emulsifiers,
C) 0% to 5% by weight of foam stabilizers,
D) 0% to 5% by weight of viscosity modifiers,
E) 0% to 2% by weight of typical preservatives, bactericides, fungicides, and antioxidants,
F) 0.5% to 10% by weight of at least the bismuth carboxylate, and
G) water.

3. Use of the release agent dispersion according to Claim 1 or 2 for producing polyurethane moldings.

4. Use of the release agent dispersion according to Claims 1 to 3 for improving the coverability of polyurethane moldings produced using it.

## Revendications

1. Dispersions aqueuses d'agent de démoulage pour la réalisation de corps façonnés en polyuréthane, contenant essentiellement :
A) au moins un agent actif en démoulage, du groupe formé par les savons, les huiles, les cires et les silicones,
B) des émulsifiants,
C) éventuellement, des agents stabilisateurs de mousse,
D) éventuellement, des agents modificateurs de la viscosité,
E) éventuellement, des auxiliaires et des additifs,
F) de 0,5 % à 10 % en poids d'au moins un carboxylate de bismuth, et
G) de l'eau,
en utilisant du trioctoate de bismuth et/ou du trinéodécanoate de bismuth en tant que carboxylate de bismuth.

2. Dispersions aqueuses d'agent de démoulage pour la réalisation de corps façonnés en polyuréthane, selon la revendication 1, contenant essentiellement :
A) de 0,5 à 40 % en poids d'au moins un agent actif en démoulage du groupe formé par les savons, les huiles, les cires et les silicones,
B) de 0,1 à 10 % en poids d'émulsifiants,
C) de 0 à 5 % en poids d'agents stabilisateurs de mousse,
D) de 0 à 5 % en poids d'agents modificateurs de la viscosité,
E) de 0 à 2 % en poids de conservateurs, de bactéricides, de fongicides et d'antioxydants habituels,
F) de 0,5 à 10 % en poids d'au moins le carboxylate de bismuth, et
G) de l'eau.

3. Utilisation des dispersions d'agent de démoulage selon les revendications 1 ou 2 pour la réalisation de corps façonnés en polyuréthane.

4. Utilisation des dispersions d'agent de démoulage selon les revendications 1 à 3 pour améliorer l'aptitude au garnissage des corps façonnés en polyuréthane réalisés avec celles-ci.
